# EUROPÄISCHE PATENTSCHRIFT

(11) **EP 2 153 716 B1**
(45) Veröffentlichungstag und Bekanntmachung des Hinweises auf die Patenterteilung: **09.11.2016**
(21) Anmeldenummer: 09167646.0
(22) Anmeldetag: 11.08.2009
(51) Int. Cl.: A01K 5/02

(54) **Flüssigfütterungsanlage**
Liquid feed assembly
Installation d'alimentation liquide

(30) Priorität: 13.08.2008 DE 102008038892
(43) Veröffentlichungstag der Anmeldung: 17.02.2010
(73) Patentinhaber: Big Dutchman International GmbH, 49377 Vechta-Calveslage (DE)
(72) Erfinder: Bärlein, Norbert, 49661, Cloppenburg (DE)
(74) Vertreter: Eisenführ Speiser

(56) Entgegenhaltungen:
- DE-U1- 20 111 549
- DE-U1- 20 314 986
- DE-U1- 29 823 032

## Beschreibung

Die vorliegende Erfindung betrifft ein Verfahren zur Flüssigfütterung von Tieren, insbesondere von Schweinen, und eine automatische Flüssigfütterungsanlage.

Flüssigfütterungssysteme spielen in der modernen Tierhaltung eine immer wichtigere Rolle. Ihr Einsatz ist vor allem dann vorteilhaft, wenn kostengünstige Futtermittel wie z. B. Molke oder Rückstände aus der Lebensmittelindustrie verwendet werden können. Weiterhin haben Flüssigfütterungsanlagen den Vorteil, dass neben der Fütterung mit pastösen oder festen Futtermitteln, die in einen Fluid-strom förderbar sind, auch eine reine Flüssigkeitsfütterung mit flüssigen Futtermitteln möglich ist. Bei Flüssigfütterungsanlagen besteht eine hohe Anforderung an Hygiene und Sauberkeit.

Bisher wurde bei bekannten Systemen das Trockenfutter zusammen mit einer Flüssigkeit in einen mit einem Rührwerk versehenen Mischtank geführt. In dem Mischtank wurden die beiden Komponenten mittels des Rührwerks vermischt und die vermischten Komponenten wurden anschließend mittels einer Futterpumpe an entsprechende Futterstellen geführt. Die bisher bekannten Systeme haben aufgrund der beschriebenen Batchbetriebsweise den Nachteil, dass immer eine Mindestmenge einer Futtermischung bereitgestellt werden muss, da die Größe eines vorgegebenen Mischtanks eine bestimmte Menge an Flüssigkeit und Trockenfutter erfordert, um eine ausreichende Mischung des Trockenfutters mit der Flüssigkeit zu erreichen. Es ist wünschenswert, eine Flüssigfütterungsan-lage dahingehend zu verbessern, das in flexiblerer Weise auf die angeforderten Futtermengen reagiert werden kann.

Auch kann bei den bekannten Systeme nicht sofort auf eine Nachfrage nach Futter reagiert werden, da das Trockenfutter zunächst in einen Mischbehälter gefüllt werden muss, dann die Flüssigkeit hinzugegeben werden muss und schließlich die Mischung erst eine gewisse Zeit mittels eines Rührwerks gerührt werden muss, um eine Mischung zu erhalten, die dann an die Tiere verfüttert werden kann. Aufgrund des großen Mischtanks und des verwendeten Rührwerks sind die bisherigen Systeme darüber hinaus aufwändig zu reinigen.

Aus DE 20314986 U1 ist ein Fördersystem für eine Flüssigfütterung von Tieren bekannt, welches einen fahrbaren Futterbehälter aufweist. Der fahrbare Futter-behälter weist einen Trockenkomponentenbehälter auf, aus dem Futterbestand-teile mit einer Förderschnecke abgefördert werden. Aus einem Flüssigkompo-nentenbehälter wird mittels einer Förderpumpe Flüssigkeit in eine Mischeinheit gepumpt. Der Vermischunasprozess in der Mischeinheit wird durch die Förder-schnecke aktiv unterstützt.

Aus DE 29823032 U1 ist eine Flüssigfütterungsanlage bekannt, bei der Frisch-wasser, welches zum Spülen der Rohrleitung verwendet wird, in einem Altwassertank aufgefangen und aus diesem Altwassertank zur Anmischung von neuem Flüssigfutter einem Mischbehälter zugeführt werden kann.

Ziel der vorliegenden Erfindung ist es, ein Verfahren zur Flüssigfütterung von Tieren und eine Flüssigfütterungsanlage bereitzustellen, welche wenigstens eines der oben genannten Nachteile überwinden, welche insbesondere schnell und bedarfsgenau eine angeforderte Futtermenge bereitstellen. Darüber hinaus besteht die Aufgabe darin, dass die Flüssigfütterungsanlage einfach zu reinigen ist.

Die Aufgabe wird erfindungsgemäß durch ein Verfahren nach Anspruch 1 zur Flüssigfütterung von Tieren gelöst.

Dies hat den Vorteil, dass eine angeforderte Futtermenge bedarfsgenau bereitgestellt werden kann, denn bei dem erfindungsgemäßen Verfahren wird im Wesentlichen die Menge gefördert, die gerade gemischt wurde. Wenn die Förderung der gemischten Futtermenge beendet wird, wird auch das Mischen der wenigstens einen festen oder pastösen Futterkomponente mit der Flüssigkeit beendet, so dass keine nennenswerten Restmengen an nicht an Futtertröge verteiltes Flüssigfutter nach Beendigung des Fördervorgangs, d.h. nach Beendigung des Füttervorgangs, vorhanden sind. Im Fördermodus wird gewährleistet, dass die für das Flüssigfutter benötigten Bestandteile gemischt werden und an die Futtertröge gelangen.

Es sei hier angemerkt, dass unter fester oder pastöser Futterkomponente hierbei jede Art von Futterbestandteil, beispielsweise Trockenfutter oder eine Paste, gemeint ist, die für eine Mischung mit einer Flüssigkeit, wie beispielsweise Wasser oder Molke, geeignet ist.

Weitere vorteilhafte Ausführungsformen sind in den Unteransprüchen angegeben.

Es ist bevorzugt, dass bei dem erfindungsgemäßen Verfahren sowohl das Mischen der wenigstens einen festen oder pastösen Futterkomponente mit der Flüssigkeit als auch das Fördern des Flüssigfutters in Richtung wenigstens einer Abgabestelle für die Fütterung der Tiere im Wesentlichen gleichzeitig und/oder kontinuierlich erfolgt. Somit kann das Flüssigfutter im Vergleich zum Stand der Technik schneller zur Verfügung gestellt werden, da bei dem erfindungsgemäßen Verfahren kein zeitaufwändiger (Vor-)Schritt des Mischens der für den Fütterungsvorgang benötigten (Gesamt-)Menge an Flüssigfutter in einem Mischbehälter notwendig ist bzw. der Menge an Flüssigfutter, die in einem Mischschritt maximal möglich ist. Bei dem erfindungsgemäßen Verfahren kann fast unmittelbar nach Einschalten einer Flüssigfütterungsanlage eine kleine Menge an Flüssigfutter bereitgestellt werden, welche sofort an die Abgabestelle gefördert wird, während gleichzeitig weiteres Flüssigfutter für eine weitere Förderung gemischt wird.

Ein weiterer Vorteil ist, dass die Futtertröge kontinuierlich befüllbar sind und keine Wartezeiten auftreten, bis, wie bei bekannten Systemen, wieder ein Batch zur Förderung von Futter an eine Abgabestelle eines Futtertrogs bereit ist. Somit können selbst Anlagen mit einer sehr großen Anzahl von Futterstellen, kontinuierlich, d.h. ohne Verzögerungszeiten mit Futter beliefert werden.

Erfindungsgemäß wird ein Füllstand eines mit der Abgabestelle in Verbindung stehenden Futtertrogs mittels eines Sensors überwacht, wobei der Sensor ein Futteranforderungssignal abgibt, wenn ein vordefinierter niedriger Füllstand des Futtertrogs erkannt wurde. Somit können gezielt die Futtertröge gefüllt werden, die einen niedrigen Füllstand aufweisen.

Erfindungsgemäß umfasst das Verfahren einen Umpumpmodus, bei dem die Flüssigkeit oder das Flüssigfutter in einer Ringleitung zirkuliert und das Futteranforderungssignal überwacht wird. Beispielsweise kann beim Start des erfindungsgemäßen Verfahrens Flüssigkeit in einer Ringleitung zirkulieren. Dies hat den Vorteil, dass sich zu einem Behälter, der mit der Ringleitung in Verbindung steht und in dem sich die wenigstens eine feste oder pastöse Futterkomponente befindet, eine Art Sogwirkung aufbauen kann, und die aus dem geöffneten Behälter heraustretende fest oder pastöse Futterkomponente in die Ringleitung gezogen werden kann. Während der Fütterung kann der Umpumpmodus verwendet werden, um eine gewisse Menge Flüssigfutter zwischenzulagern, wenn für kurze Zeit kein Flüssigfutter angefordert wird. Dies hat den Vorteil, dass sofort nach Erhalt eines Futteranforderungssignals zur Abgabe von Futter an die wenigstens eine Abgabestelle das Flüssigfutter an die wenigstens eine Abgabestelle gefördert werden kann.

Erfindungsgemäß erfolgt ein Umschalten in den Fördermodus, wenn ein Futteranforderungssignal von der wenigstens einen Abgabestelle abgegeben wurde. Weiterhin ist bevorzugt, dass ein Umschalten aus dem Fördermodus erfolgt, wenn keine der wenigstens einen Abgabestelle ein Futteranforderungssignal abgibt. Ein Umschalten in den bzw. aus dem Fördermodus in Abhängigkeit vom Futteranforderungssignal, hat den Vorteil, dass das Verfahren sehr flexibel auf Bedarfsschwankungen reagieren kann.

Das erfindungsgemäße Verfahren umfasst gemäß einer vorteilhaften Ausführungsform einen Pausenmodus, bei dem das Futteranforderungssignal überwacht wird, während das Flüssigfutter in einer Ringleitung ruht. Dieser Modus hat den Vorteil, dass eine gewisse Menge an bereits gemischtem Futter bereitgestellt werden kann. Da aber ansonsten kein Arbeits- oder Verfahrensschritt erfolgt, wird in diesem Modus aber kaum Energie verbraucht.

Es ist bevorzugt, dass ein Umschalten vom Umpumpmodus in den Pausenmodus erfolgt, wenn nach Ablauf einer vorbestimmten Umpumpüberwachungszeit kein Futteranforderungssignal von wenigstens einer Abgabestelle abgegeben wurde, um das gesamte Verfahren energiesparend zu gestalten.

Es ist bevorzugt, dass im Pausenmodus bei Vorliegen eines Futteranforderungssignals von wenigstens einer Abgabestelle eine vorbestimmte Pausenüberwachungszeit abgewartet wird und bei weiterhin bestehendem Futteranforderungssignal nach Ablauf dieser Pausenüberwachungszeit ein Umschalten vom Umpumpmodus in den Pausenmodus erfolgt. Hierdurch kann einerseits zügig aus einem energiesparenden Modus wieder Flüssigfutter bereitgestellt werden und andererseits ein zu häufiges Anlaufen einer Flüssigfütterungsanlage vermieden werden.

Gemäß einer vorteilhaften Ausführungsform des erfindungsgemäßen Verfahrens umfasst das Verfahren einen Mixturenwechselmodus, bei dem die wenigstens eine feste oder pastöse Futterkomponente und/oder die Flüssigkeit gewechselt werden und der nach Eingabe eines Mixturwechselbefehls eingeleitet wird, wenn nach Ablauf einer vorbestimmten Pausenmodusüberwachungszeit kein Futteranforderungssignal von der wenigstens einen Abgabestelle abgegeben wurde. Bei dem Mixturenwechel können vorzugsweise ein oder mehrere der wenigstens einen Futterkomponente und/oder die Flüssigkeit ausgetauscht werden, . Im Pausenmodus ruht, wie oben erwähnt, das Flüssigfutter, so dass eine Vermischung der ursprünglichen Mixtur mit der neuen Mixtur minimiert wird, Das erfinungsgemäße Verfahren ist hierdurch bei einer Vielzahl von Futterrezepturen einsetzbar und ermöglicht deren technisch vereinfachten Wechsel Vorteilhafterweise erfolgt ein Umschalten vom Pausenmodus in einen Stoppmodus, in dem das Flüssigfutter in der Ringleitung ruht und kein Futteranforderungssignal überwacht wird, wenn nach einer vorbestimmten zweiten Pausenmodusüberwachungszeit kein Futteranforderungssignal von der wenigstens einen Abgabestelle abgegeben wurde und kein Mixturenwechselbefehl erhalten wurde, um nicht unnötigerweise Energie zu verbrauchen, wenn kein Fütterungsbedarf vorhanden ist. Dies ermöglicht einen weitgehend automatischen Betrieb einer Flüssigfütterungsanlage und den Betrieb auch großer Flüssigfütterungsanlagen mit jeweils bedarfsgerechter Befüllung.

Vorteilhafterweise erfolgt die Bereitstellung und Verfütterung von Flüssigfutter gemäß der Ansprüche 9 oder 10, wodurch eine weitgehend automatisierte, bedarfsgerechte und hygienisch sichere Durchführung der Fütterung erzielt werden kann.

Einen weiteren Aspekt der vorliegenden Erfindung betrifft eine Flüssigfütterungsanlage nach Anspruch 11.

Die erfindungsgemäße Flüssigfütterungsanlage hat nun den Vorteil, dass kein Mischtank vorgesehen ist, so dass genau die angeforderte Flüssigfuttermenge gemischt und an den Futterstrang gefördert werden kann, ohne dass eine Übermenge an Flüssigfutter produziert werden muss. Weitere Vorteile bestehen in der einfachen Bedienbarkeit, der problemlosen Anpassbarkeit der Anlage an unterschiedliche Stallgrößen, der einfachen und sicheren Reinigungsmöglichkeit, der hohen technischen Zuverlässigkeit aufgrund des technisch robusten Aufbaus und der langen Wartungsintervalle.

Vorteilhafterweise umfasst die vorliegende Erfindung eine Misch-PumpVorrichtung, die einen Stator und einen relativ zu diesem Stator rotierbaren und koaxialen Rotor aufweist. Eine solche auch als "shear pump" bekannte MischPump-Vorrichtung ist vergleichsweise einfach zu reinigen, so dass die erfindungsgemäße Flüssigfütterungsanlage im Vergleich zu bekannten Systemen mit geringerem Wartungs- und Reinigungsaufwand den hygienischen Anforderungen genügt.

Bei einer weiteren vorteilhaften Ausführungsform ist die Einlaufvorrichtung ein Behälter, insbesondere ein Einlauftrichter, der wenigstens einen Sensor aufweist, der den Füllstand des Behälters erfasst. Somit wird gewährleistet, dass immer eine bestimmte Menge einer Futterkomponente in dem Einlauftrichter vorhanden ist, so dass immer eine Mischung zwischen einer Futterkomponente und einer Flüssigkeit gewährleistet ist. Weiterhin kann der Sensor geeignet sein, eine Fehlermeldung abzugeben, wenn der Füllstand über- oder unterschritten ist. Insbesondere kann so jederzeit die wenigstens eine Futterkomponente für eine Mischung mit der Flüssigkeit zur Verfügung stehen und dosiert zugegeben werden.

Vorteilhafterweise ist die aus dem Flüssigkeitsvorratsbehälter herausfließende Flüssigkeitsmenge regelbar. Somit kann das Mischungsverhältnis (der Flüssigkeitsgrad) des Futters geregelt werden. Insbesondere kann die Regelung der Flüssigkeitsmenge beispielsweise über eine Dosierpumpe erfolgen.

Erfindungsgemäß ist ein Ventil, insbesondere ein Bypassventil, vorgesehen, das in einem geöffneten Zustand die Zirkulierung des Flüssigfutters in einer eine Eingangsöffnung der Misch-PumpVorrichtung mit der Ausangsöffnung der Misch-Pumpvorrichtung verbindenden Ringleitung ermöglicht und zugleich vorzugsweise die Förderung in Richtung Abgabestelle unterbricht richt. Somit kann der Futterstrom zu der Abgabestelle unterbrochen werden, wenn zum Beispiel kein Futteranforderungssignal abgegeben wurde. Auf diese Weise kann beispielsweise eine bestimmte Menge gemischten Futters zur sofortigen Förderung vorrätig gehalten werden ohne dass die Pumpe angehalten werden muss.

Bei einer vorteilhaften Ausführungsform der vorliegenden Erfindung kann dem Mischpumpenteil eine Druckerhöhungspumpe seriell nachgeschaltet sein, wenn beispielsweise die Anlage sehr groß ist und der Futterstrom weite Wege zurücklegen muss, oder wenn sich das Flüssigfutter nur schwer fördern lässt.

Bei einer vorteilhaften Ausführungsform kann der Futterstrang mindestens einen Hauptstrang und eine Mehrzahl von den Hauptstrang mit einer entsprechenden Mehrzahl von Abgabestellen verbindenden Untersträngen umfassen. Dies ermöglicht den Einsatz der Flüssigfütterungsanlage beispielsweise in großen Ställen, vor allem dann, wenn beispielsweise jedem Hauptstrang und jedem Unterstrang jeweils ein Stellmittel zur Absperrung gegenüber der Zufuhr von Flüssigfutter zugeordnet ist, so dass ein Futterstrang zum Beispiel segmentweise befüllt werden kann.

Vorteilhafterweise umfasst jeder Futterstrang mindestens eine Abgabestelle, die mit einem Futtertrog in Verbindung steht, wobei der Futtertrog einen Sensor umfasst, um den Füllstand des Futtertrogs zu erfassen. Somit kann Futter genau dann nachgefüllt werden, wenn der Füllstand des Futtertrogs leer anzeigt. Zeigt der Füllstand des Futtertrogs voll an, wird die Futterzufuhr gestoppt.

Dies ermöglicht einen weitgehend automatischen Betrieb der Flüssigfütterungsanlage.

Bevorzugte Ausführungsformen der Erfindung werden anhand der angehängten Figur beschrieben. Darin zeigt:

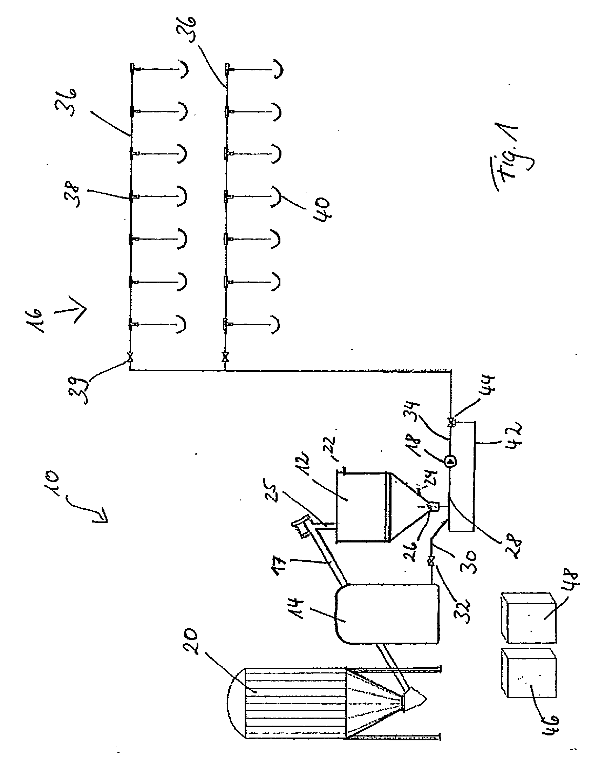

- Fig. 1:: eine schematische Ansicht der Flüssigfütterungsanlage gemäß der vorliegenden Erfindung.

In Figur 1 ist eine Flüssigfütterungsanlage 10 für Schweine dargestellt. Die Flüssigfütterungsanlage 10 umfasst eine Futterkomponentenzuführung in Form eines Einlauftrichters 12, einen Wasservorratsbehälter 14, einen Futterstrang 16 und ein Mischpumpenteil 18.

Das Mischpumpenteil 18 ist eine aus einem Stator und zu diesem koaxial gelagerten und drehbaren Rotor bestehende Pumpe, die eine Misch- und Pumpwirkung wirkungsvoll kombiniert.

Der Einlauftrichter 12 ist über eine Zuführleitung 17 mit einem Silo 20 verbunden. In dem Einlauftrichter 12 befinden sich Sensoren 22, 24, wobei der Sensor 22 den maximalen Füllstand erfasst und der Sensor 24 den minimalen Füllstand. Die Erfassung des maximalen Füllstands ist mit einer Zu-oder Abschaltung von Zuführschnecken 25 verknüpft, während die Erfassung des minimalen Zustands mit einer Freigabe des Mischpumpenteils 18 in Verbindung steht. Weiterhin ist am Einlauftrichter 12 eine regelbare Stellklappe 26 vorgesehen, die regelbar in eine geöffnete Stellung geführt werden kann, um eine Futterkomponente dosiert aus dem Einlauftrichter herauslaufen zu lassen, und die in einer geschlossenen Stellung den Einlauftrichter 12 gegenüber einem Auslaufen der Futterkomponente abriegelt. Die aus dem Einlauftrichter heraustretende Futterkomponente wird in eine Vorlaufleitung 28 geführt.

Als Futterkomponente wird vorzugsweise eine feste, insbesondere pulverförmige oder granulatförmige oder eine pastöse Futterkomponente verwendet.

Über eine Wasserzufuhrleitung 30 ist der Wasservorratsbehälter 14 ebenfalls mit der Vorlaufleitung 28 in Fließrichtung des Wassers vor der Zufuhr der Futterkomponenten verbunden. In der Wasserzufuhrleitung 30 ist ein Wasserzufuhrventil 32 angeordnet, um den Wasserzufluss zur Vorlaufleitung 28 zu regeln. Wenn auch nicht dargestellt, so kann eine Wasserzufuhrpumpe vorgesehen sein, die das Wasser in die Vorlaufleitung 28 pumpt.

Die Vorlaufleitung 28 mündet in das Mischpumpenteil 18 und über eine Futterförderleitung 34 ist das Mischpumpenteil 18 mit dem Futterstrang 16, hier ein einzelner Hauptfutterstrang, verbunden. Der Futterstrang 16 besteht aus Unterfuttersträngen 36, wobei jeder Unterfutterstrang 36 über ein Stellmittel 39 gegenüber der Zufuhr von Flüssigfutter verriegelbar ist. Jeder Unterstrang 36 umfasst eine Vielzahl von Abgabestellen 38, wobei jede Abgabestelle 38 mit einem Futtertrog 40 verbunden ist. Die Abgabestellen 38 sind pneumatische Ventile, die beispielsweise elektrisch ansteuerbar sind und die den Futterstrom Richtung Futtertrog 40 freigeben. Jeder Futtertrog 40 umfasst einen Füllstandsensor. Ist der Füllstand eines Futtertrogs 40 unterhalb eines vorbestimmten Levels wird über die Abgabestelle 38 ein Signal an das Mischpumpenteil 18 gegeben, um den Futtertrog 40 zu befüllen.

In der Flüssigfütterungsanlage 10 ist eine Bypassleitung 42 vorgesehen, die in Förderungsrichtung der Futterkomponente bzw. des Wassers vor der Zufuhr des Wassers bzw. der Futterkomponente beginnt und hinter dem Mischpumpenteil 18 wieder in die Futterförderleitung 34 mündet. An der Mündungsstelle zur Futterförderleitung 34 ist ein Bypassventil 44 vorgesehen.

Weiterhin umfasst die Flüssigfütterungsanlage eine Steuereinheit 46, um die in der Anlage vorhandenen Sensoren und Ventile sowie Lastteile 48, wie beispielsweise Zuführschnecken, und eine Uhr zu steuern.

Im Anlaufmodus oder ersten Umpumpmodus, d.h. beim Einschalten der Flüssigfütterungsanlage ist das Bypassventil 44 geöffnet, so dass kein Futter zu dem Futterstrang 16 geführt wird. Die Stellklappe 26, die den Einlauftrichter 12 gegenüber der Vorlaufleitung 28 verschließt, ist ebenfalls geschlossen. Wenn sich keine Flüssigkeit in der Vorlaufleitung 28 befindet, wird mittels des Wasserzufuhrventils 32 Wasser aus dem Wasservorratsbehälter 14 in die Vorlaufleitung 28 geführt. Gleichzeitig läuft das Misch-Pumpenteil 18 an und fördert die Flüssigkeit über die Bypassleitung 42 im Kreis.

Soll ein Futtertrog 40 befüllt werden, wird ein Futteranforderungssignal von der Abgabestelle 38 an die Steuereinheit 46 gesendet und das Bypassventil 44 wird geschlossen. Gleichzeitig wird die Stellklappe 26 des Einlauftrichters 12 geöffnet, und die Futterkomponente, die sich in dem Einlauftrichter befindet, gelangt mit Unterstützung eines durch den Wasserfluss in der Vorlaufleitung 28 verursachten Sogs die Vorlaufleitung 28 und wird zum Mischpumpenteil 18 geführt. Die Futterkomponenten wird in dem Mischpumpenteil 18 mit dem Wasser vermischt und als Flüssigfutter über die Futterförderleitung 34 an den Futterstrang 16 zu dem entsprechenden Futtertrog 40 geführt. Die Flüssigfütterungsanlage befindet sich nun im Fördermodus.

Sobald alle Futtertröge 40 gefüllt sind und kein Futteranforderungssignal mehr abgegeben wird, wird das Bypassventil 44 geöffnet und die Futterzufuhr zum Hauptstrang unterbrochen. Gleichzeitig wird die Stellklappe 26 des Einlauftrichters 12 geschlossen, damit keine Futterkomponenten mehr in die Vorlaufleitung 28 gelangen. Das sich noch in der Vorlaufleitung 28 befindliche Wasser-Futterkomponenten-Gemisch wird über die Bypassleitung 42 im Kreis geführt. Die Flüssigfütterungsanlage ist nun im Umpumpmodus.

Im Umpumpmodus wird ständig das Futteranforderungssignal der Abgabestellen 38 überwacht, bis die Aufforderung kommt, eine der vielen Futterstellen 40 zu befüllen. Kommt innerhalb einer vorbestimmten Zeit von einer Abgabestelle 38 ein Futteranforderungssignal, geht die Flüssigfütterungsanlage wieder in den Fördermodus zurück, indem das Bypassventil 44 geschlossen wird und die Stellklappe 26 zum Einlauftrichter geöffnet wird. Erfolgt innerhalb der vorbestimmten Zeit keine Anforderung einer Abgabestelle 38, einen Futtertrog zu befüllen, geht die Flüssigfütterungsanlage vom Umpumpmodus in den Pausenmodus.

Im Pausenmodus wird das Mischpumpenteil 18 abgestellt, die Stellklappe 26 geschlossen und das Bypassventil 44 geöffnet, so dass das Flüssigfutter in einer Ringleitung bestehend aus einem Abschnitt der Vorlaufleitung 28, einem Abschnitt der Futterförderleitung 34 und der Bypassleitung 42 ruht. Gleichzeitig werden die Futteranforderungssignale von den Abgabenstellen 38 überwacht, um vom Pausenmodus in den Fördermodus oder Umpumpmodus überzugehen, wenn ein Futteranforderungssignal von einer Abgabestelle 38 abgegeben wurde. Liegt ein neues Anforderungssignal vor, wird jedoch eine Pausenzeit abgewartet, die etwa 5 bis 10min. beträgt, damit das System nicht zu häufig anläuft. Wenn nach Ablauf einer vorbestimmten Überwachungszeit im Pausenmodus kein Futteranforderungssignal erfolgt, kann ein Mixturenwechsel eingeleitet werden. Der Mixturenwechsel erfolgt beispielsweise über ein Startsignal aufgrund einer vorbestimmten Uhrzeit oder aufgrund einer manuellen Eingabe. Dann werden die Futterkomponenten im Einlauftrichter 12 geändert, indem beispielsweise die Zufuhrleitung 17 mit einem anderen Silo 20 verbunden wird. Nach dem Mixturenwechsel geht die Flüssigfütterungsanlage wieder in den Pausenmodus und überwacht das Futteranforderungssignal der Abgabestelle 38 zur Befüllung der Futtertröge 40.

Die Fütterung und der anschließende Mixturenwechsel werden so lange wiederholt, bis die letzte Mixtur verfüttert wurde. Nach Verfütterung der letzten Mixtur geht die Anlage in den Stoppmodus. Beim Stoppmodus wird das Mischpumpenteil 18 ausgeschaltet, die Stellklappe 26 zum Einlauftrichter 12 geschlossen und das Bypassventil 44 geöffnet. In dem Stoppmodus erfolgt keine Überwachung eines Futteranforderungssignals einer Abgabestelle 38 zur Befüllung der Futtertröge 40.

Die Befüllung des Futterstrangs 16 erfolgt auf die folgende Art und Weise. Zunächst kommt von einer Abgabestelle 38 mit einem leeren Futtertrog 40 ein Futteranforderungssignal an einen Unterfutterstrang 36, danach kommt ein Signal vom Unterfutterstrang 36 an den Hauptfutterstrang und schließlich kommt ein Signal vom Hauptfutterstrang an das Mischpumpenteil 18. Liegt mindestens ein Futteranforderungssignal von einem Hauptstrang an das Mischpumpenteil 18 vor, wird die Flüssigfütterungsanlage beispielsweise aus dem Anlaufmodus, Umpumpmodus oder Pausenmodus in den Fördermodus gesetzt.

Zunächst wird der Hauptfutterstrang eingeschaltet, der als erster einen leeren Futtertrog meldet. Danach wird der Unterfutterstrang 36 eingeschaltet, der den leeren Futtertrog 40 meldet, in dem das Stellmittel 39 zum Unterfutterstrang 36 geöffnet wird. Schließlich wird die Abgabestelle 38 eingeschaltet, die als erste einen leeren Futtertrog 40 gemeldet hat. Das Futter wird über die Abgabestelle 38 an den Futtertrog 40 geführt, bis ein Sensor im Futtertrog 40 voll meldet. Danach wird die Abgabestelle 38 verzögert ausgeschaltet und das Futter an den Futtertrog 40 geführt, dessen Abgabestelle 38 später als die oben genannte leer gemeldet hatte. Der Futtertrog 40 der entsprechenden Abgabestelle 38 wird gefüllt, bis der Sensor im Futtertrog 40 voll meldet. Der Vorgang wiederholt sich, bis die letzte Abgabestelle 38 des Unterfutterstrangs 36 meldet, dass ihr Futtertrog 40 voll ist. Ist der letzte Futtertrog 40 gefüllt und meldet die letzte Abgabestelle 38 voll, wird der Unterfutterstrang 36 als voll gekennzeichnet. Daraufhin wird der nächste Unterfutterstrang 36 eingeschaltet. Die Befüllung der Futtertröge des nächsten Unterstrangs erfolgt in der oben beschriebenen Art und Weise wie beim ersten freien Unterfutterstrang 36. Ist auch der zweite Unterfutterstrang 36 vollständig gefüllt, wird der nächste Unterfutterstrang befüllt. Dieser Vorgang wiederholt sich, bis alle Unterfutterstränge 36 befüllt sind. Nach Befüllung des letzten Unterfutterstrangs 36 wird der Hauptfutterstrang als voll gekennzeichnet. Daraufhin kann der nächste Hauptfutterstrang eingeschaltet werden. Die Befüllung des folgenden Hauptfutterstrangs erfolgt in der oben beschriebenen Art und Weise des ersten Hauptfutterstrangs. Sind alle Hauptfutterstränge befüllt, wird die Vollmeldung zurückgesetzt und der Vorgang beginnt mit einem Befüllen des ersten Hauptfutterstrangs. Kommt eine Vollmeldung unmittelbar nach dem Zurücksetzen der Vollmeldung, geht die Anlage in den oben beschriebenen Umpumpmodus.

Das oben beschriebenen Verfahren zur Befüllung des Futterstrangs 16 kann auch auf andere Art und Weise erfolgen. Beispielsweise kann bei großen Flüssigfütterungsanlagen eine Segmentierung des Futterstrangs 16 vorgenommen werden, damit einzelne Futterstränge schnell hintereinander befüllt werden können, während andere Futterstränge zu einem anderen Zeitpunkt befüllt werden. Auch kann die Reihenfolge der zu befüllenden Futterstränge variiert werden.

Bei der oben beschriebenen Flüssigfütterungsanlage und dem beschriebenen Verfahren kann in Förderrichtung des Flüssigfutters hinter dem Mischpumpenteil 18 eine Druckerhöhungspumpe vorgesehen sein, wenn beispielsweise sehr lange Wege zum Futtertrog 40 zurückgelegt werden müssen und die Förderleistung des Mischpumpenteils 18 hierfür nicht ausreicht. Es ist denkbar, die oben erwähnte Wasserzufuhrpumpe als Druckerhöhungspumpe zu verwenden.

Bei dem in der Ausführungsform verwendeten Mischpumpenteil handelt es sich wie oben dargestellt, um eine Shear pump (Scherpumpe). Es können auch andere Pumpen verwendet werden, die ein Mischen und Pumpen miteinander kombinieren. Darüber hinaus können auch Pumpen verwendet werden, die zusätzlich noch eine Mahlfunktion für ganze Getreidekörner bereitstellen.

In der beschriebenen Ausführungsform wurde eine vorzugsweise feste oder pastöse Futterkomponente mit Wasser vermischt. Selbstverständlich können auch mehrere Futterkomponenten verwendet werden, die beispielsweise hintereinander oder parallel dem Einlauftrichter zugeführt werden, auch kann anstelle von Wasser jede für die Fütterung geeignete Flüssigkeit verwendet werden.

Die Ansteuerung der Abgabenstellen wurde nicht im Detail beschrieben. Es sind jedoch verschiedene Möglichkeiten denkbar. Beispielsweise können die Ventile der Abgabenstellen elektrisch angesteuert werden, wobei der Zustand eines Ventils gespeichert wird.

Weiterhin können über die Flüssigfütterungsanlage auch für die Fütterung notwendige Zusatzstoffe oder Medikamente entweder über die Flüssigkeitszufuhr oder über die Zufuhr für die Futterkomponenten dem Flüssigfutter beigegeben werden. Weiterhin kann bei reiner Flüssigkeitszufuhr und -verteilung die Anlage auch zur Tränkung der Tiere eingesetzt werden.

Es ist auch denkbar, die Flüssigkeitszufuhr für Reinigungszwecke zu nutzen, in dem die Flüssigfütterungsanlage beispielsweise mit Wasser gespült wird.

Eine Entleerung der Futterstränge nach Beendigung der Fütterung kann mittels Luftdruck erfolgen.

## Patentansprüche

1. Verfahren zur Flüssigfütterung von Tieren, unter Verwendung einer Vorrichtung nach einem der Ansprüche 11 bis 18 umfassend die Schritte: Bereitstellen wenigstens einer festen oder pastösen Futterkomponente; Zusammenführen einer Flüssigkeit und der wenigstens einen festen oder pastösen Futterkomponente; Mischen der wenigstens einen festen oder pastösen Futterkomponente mit der Flüssigkeit zu einem Flüssigfutter und Fördern des Flüssigfutters in Richtung wenigstens einer Abgabestelle (38) für die Fütterung der Tiere, **dadurch gekennzeichnet, dass** das Verfahren einen Fördermodus umfasst, in dem das Mischen der wenigstens einen festen oder pastösen Futterkomponente mit der Flüssigkeit und das Fördern des Flüssigfutters in Richtung der Abgabestelle (38) für die Fütterung der Tiere in einem Arbeitsschritt erfolgt, **dadurch gekennzeichnet, dass** der Füllstand eines mit der Abgabestelle (38) in Verbindung stehenden Futtertrogs (40) mittels eines Sensors überwacht wird und dass der Sensor ein Futteranforderungssignal abgibt, wenn ein vordefinierter niedriger Füllstand des Futtertrogs (40) erkannt wurde, und dass das Verfahren einen Umpumpmodus umfasst, bei dem die Flüssigkeit oder das Flüssigfutter in einer Ringleitung (28, 34, 42) zirkuliert und das Futteranforderungssignal überwacht wird
und ein Umschalten in den Fördermodus erfolgt, wenn ein Futteranforderungssignal von der wenigstens einen Abgabestelle abgegeben wird.

2. Verfahren nach Anspruch 1, **dadurch gekennzeichnet, dass** das Verfahren einen Umpumpmodus umfasst, bei dem die Flüssigkeit oder das Flüssigfutter in einer Ringleitung (28, 34, 42) zirkuliert und das Futteranforderungssignal überwacht wird.

3. Verfahren nach einem der vorhergehenden Ansprüche, **dadurch gekennzeichnet, dass** ein Umschalten aus dem Fördermodus erfolgt, wenn keine der wenigstens einen Abgabestelle (38) ein Futteranforderungssignal abgibt.

4. Verfahren nach einem der vorhergehenden Ansprüche, **dadurch gekennzeichnet, dass** das Verfahren einen Pausenmodus umfasst, bei dem das Futteranforderungssignal überwacht wird, während das Flüssigfutter in einer Ringleitung (28, 34, 42) ruht.

5. Verfahren nach Anspruch 4, **dadurch gekennzeichnet, dass** ein Umschalten vom Umpumpmodus in den Pausenmodus erfolgt, wenn nach Ablauf einer vorbestimmten Umpumpüberwachungszeit kein Futteranforderungssignal von wenigstens einer Abgabestelle (38) abgegeben wurde.

6. Verfahren nach Anspruch 4 oder 5, **dadurch gekennzeichnet, dass** im Pausenmodus bei Vorliegen eines Futteranforderungssignals von wenigstens einer Abgabestelle eine vorbestimmte Pausenüberwachungszeit abgewartet wird und bei weiterhin bestehendem Futteranforderungssignal nach Ablauf dieser Pausenüberwachungszeit ein Umschalten vom Pausenmodus in den Umpumpmodus oder Fördermodus erfolgt.

7. Verfahren nach einem der vorhergehenden Ansprüche, **dadurch gekennzeichnet, dass** das Verfahren einen Mixturenwechselmodus umfasst, bei dem die wenigstens eine feste oder pastöse Futterkomponente und/oder die Flüssigkeit gewechselt werden, und der nach Eingabe eines Mixturwechselbefehls eingeleitet wird, wenn nach Ablauf einer vorbestimmten Pausenmodusüberwachungszeit kein Futteranforderungssignal von der wenigstens einen Abgabestelle (38) abgegeben wurde.

8. Verfahren nach Anspruch 4 und 7, **dadurch gekennzeichnet, dass** ein Umschalten vom Pausenmodus in einen Stoppmodus, in dem das Flüssigfutter in der Ringleitung (28, 34, 42) ruht und kein Futteranforderungssignal überwacht wird, erfolgt, wenn nach einer vorbestimmten zweiten Pausenmodusüberwachungszeit kein Futteranforderungssignal von der wenigstens einen Abgabestelle abgegeben wurde und kein Mixturenwechselmodus erfolgt.

9. Verfahren nach einem der vorgehenden Ansprüche, **dadurch gekennzeichnet,**
- **dass** ein erster Umpumpmodus vorgesehen ist, bei dem die Flüssigkeit in einer Ringleitung zirkuliert und ein Futteranforderungssignal überwacht wird;
- **dass** nach Erhalt eines Futteranforderunssignals vom ersten Umpumpmodus in den Fördermodus geschalten wird, wobei im Fördermodus das Futteranforderungssignal weiter überwacht wird,
- **dass** der Fördermodus in einen zweiten Umpumpmodus übergeht, wenn kein Futteranforderungssignal mehr vorliegt, wobei bei dem zweiten Umpumpmodus das Flüssigfutter in der Ringleitung zirkuliert und das Futteranforderungssignal überwacht wird,
- **dass** vom zweiten Umpumpmodus entweder in den Fördermodus geschaltet wird, wenn ein Futteranforderungssignal wieder vorliegt, nach Ablauf einer vorbestimmten Umpumpmodusüberwachsungszeit vom Umpumpmodus in den Pausenmodus geschaltet wird, **gekennzeichnet durch** ein Ventil (44), insbesondere ein Bypassventil, wie in Anspruch 11.

10. Verfahren nach Anspruch 9, **dadurch gekennzeichnet, dass** vom Pausenmodus entweder in den zweiten Umpumpmodus oder Fördermodus geschaltet wird, wenn ein Futteranforderungssignal ausgegeben wird, oder nach Ablauf einer vorbestimmten Pausenmodusüberwachsungszeit in einen Mixturenwechselmodus oder einen Pausenmodus geschaltet wird.

11. Flüssigfütterungsanlage umfassend eine Futterkomponentenzuführung (12), einen Flüssigkeitsvorratsbehälter (14) und wenigstens eine Abgabestelle (38) für die Fütterung von Tieren, **gekennzeichnet durch** eine Misch-Pump-Vorrichtung mit einer ersten Eingangsöffnung zum Anschluss der Futterkomponentenzuführung (12), einer zweiten Eingangsöffnung zum Anschluss des Flüssigkeitsvorratsbehälters (14) und einer Ausgangsöffnung zum Anschluss der wenigstens einen Abgabestelle (38), und welche ausgebildet ist, in einem Arbeitsschritt wenigstens eine Futterkomponente aus der Futterkomponentenzuführung (12) mit einer Flüssigkeit aus dem Flüssigkeitsbehälter (14) zur Herstellung von Flüssigfutter zu mischen und das Flüssigfutter in Richtung der wenigstens einen Abgabestelle (38) zu fördern, **gekennzeichnet durch** ein Ventil (44), insbesondere ein Bypassventil, das in einem geöffneten Zustand die Zirkulierung des Flüssigfutters in einer eine Eingangsöffnung der Misch-Pump-Vorrichtung mit der Ausgangsöffnung der MischPumpvorrichtung verbindenden Ringleitung ermöglicht und zugleich die Förderung in Richtung der Abgabestelle (38) unterbricht.

12. Flüssigfütterungsanlage nach Anspruch 11, **dadurch gekennzeichnet, dass** die Misch-Pump-Vorrichtung einen Stator und einen relativ zu diesem Stator rotierbaren und koaxialen Rotor aufweist.

13. Flüssigfütterungsanlage nach einem der Ansprüche 11 oder 12, **dadurch gekennzeichnet, dass** die Einlaufvorrichtung ein Behälter, insbesondere ein Einlauftrichter, ist, der wenigstens einen Sensor (22, 24) aufweist, um den Füllstand des Behälters zu erfassen.

14. Flüssigfütterungsanlage nach einem der Ansprüche 11 bis 13, **dadurch gekennzeichnet, dass** die aus dem Flüssigkeitsvorratsbehälter (14) herausfließende Flüssigkeitsmenge regelbar ist.

15. Flüssigfütterungsanlage nach einem der Ansprüche 11 bis 14, **dadurch gekennzeichnet, dass** dem Misch-Pumpenteil (18) eine Druckerhöhungspumpe seriell nachgeschaltet ist.

16. Flüssigfütterungsanlage nach einem der Ansprüche 11 bis 15, **dadurch gekennzeichnet, dass** der Futterstrang (16) mindestens einen Hauptstrang und eine Mehrzahl von den Hauptstrang mit einer entsprechenden Mehrzahl von Abgabestellen verbindenden Untersträngen (36) umfasst.

17. Flüssigfütterungsanlage nach einem der Ansprüche 11 bis 16, **dadurch gekennzeichnet, dass** jedem Hauptstrang und jedem Unterstrang (36) jeweils eine Stellmittel (39) zur Absperrung gegenüber der Zufuhr von Flüssigfutter zugeordnet ist.

18. Flüssigfütterungsanlage nach einem der Ansprüche 11 bis 17, **dadurch gekennzeichnet, dass** jeder Futterstrang (16) mindestens eine Abgabestelle (38) umfasst, welche mit einem Futtertrog (40) in Verbindung steht, wobei der Futtertrog (40) wenigstens einen Sensor umfasst, um den Füllstand des Futtertrogs (40) zu erfassen.

## Claims

1. Method for the liquid feeding of animals using a device according to one of claims 11 to 18, comprising the steps: provision of at least one solid or paste-like feed component; bringing together of a liquid and the at least one solid or paste-like feed component; mixing of the at least one solid or paste-like feed component with the liquid to a liquid feed and conveying of the liquid feed towards at least one delivery point (38) for feeding of the animals, **characterised in that** the method comprises a conveying mode in which mixing of the at least one solid or paste-like feed component with the liquid and conveying of the liquid feed towards the delivery point (38) for feeding of the animals takes place in one process step, **characterised in that** the filling level of a feed trough (40) connected to the delivery point (38) is monitored by means of a sensor and that the sensor delivers a feed requirement signal if a predefined low filling level in the feed trough (40) has been identified, and that the method comprises a pump transfer mode in which the liquid or liquid feed circulates in a loop (28, 34, 42) and the feed requirement signal is monitored,
and switching to conveying mode takes place if a feed requirement signal from the at least one delivery point is delivered.

2. Method according to claim 1, **characterised in that** the method comprises a pump transfer mode in which the liquid or liquid feed circulates in a loop (28, 34, 42) and the feed requirement signal is monitored.

3. Method according to one of the preceding claims, **characterised in that** switching from conveying mode takes place if none of the at least one delivery point (38) delivers a feed requirement signal.

4. Method according to one of the preceding claims, **characterised in that** the method comprises a pause mode in which the feed requirement signal is monitored while the liquid feed rests in a loop (28, 34, 42).

5. Method according to claim 4, **characterised in that** switching from pump transfer mode to pause mode takes place if, at the end of a predetermined pump transfer monitoring time, no feed requirement signal from at least one delivery point (38) has been delivered.

6. Method according to claim 4 or 5, **characterised in that** in pause mode, if there is a feed requirement signal from at least one delivery point, a predetermined pause monitoring time is awaited and if there is furthermore a feed requirement signal at the end of this pause monitoring time, switching from pause mode to pump transfer mode or conveying mode takes place.

7. Method according to one of the preceding claims, **characterised in that** the method comprises a mixture change mode in which the at least one solid or paste-like feed component and/or liquid are changed and which is introduced after a mixture change command is entered if, at the end of a predetermined pause mode monitoring time, no feed requirement signal from the at least one delivery point (38) has been delivered.

8. Method according to claim 4 and 7, **characterised in that** switching from pause mode to a stop mode in which the liquid feed rests in the loop (28, 34, 42) and no feed requirement signal is monitored, takes place if, after a predetermined second pause mode monitoring time, no feed requirement signal from the at least one delivery point has been delivered and no mixture change mode takes place.

9. Method according to one of the preceding claims, **characterised in that**
- a first pump transfer mode is provided in which the liquid circulates in a loop and a feed requirement signal is monitored;
- on receipt of a feed requirement signal, it is switched from the first pump transfer mode to conveying mode, wherein in conveying mode the feed requirement signal is further monitored;
- the conveying mode changes to a second pump transfer mode if there is no longer a feed requirement signal, wherein in the second pump transfer mode the liquid feed circulates in the loop and the feed requirement signal is monitored;
- it is switched from the second pump transfer mode either to conveying mode if there is again a feed requirement signal, at the end of a predetermined pump transfer mode monitoring time it is switched from pump transfer mode to pause mode, **characterised by** a valve 44, in particular a bypass valve as in claim 11.

10. Method according to claim 9, **characterised in that** it is switched from pause mode either to the second pump transfer mode or conveying mode if a feed requirement signal is emitted or, at the end of a predetermined pause mode monitoring time, switched to a mixture change mode or a pause mode.

11. Liquid feeding system comprising a feed component supply (12), a liquid storage container (14) and at least one delivery point (38) for the feeding of animals, **characterised in that** a mixing pump device with a first entry opening is connected to the connection of the feed component supply (12), a second entry opening to the connection of the liquid storage container (14) and an exit opening to the connection of the at least one delivery point (38), and which is developed to mix, in one process step, at least one feed component from the feed component supply (12) with a liquid from the liquid container (14) to produce liquid feed and to convey the liquid feed towards the at least one delivery point (38), **characterised by** a valve (44), in particular a bypass valve, which in an open state facilitates the circulation of the liquid feed in a loop connecting an entry opening of the mixing pump device to the exit opening of the mixing pump device and at the same time interrupts conveying towards the delivery point (38).

12. Liquid feeding system according to claim 11, **characterised in that** the mixing pump device has a stator and a coaxial rotor rotatable relative to this stator.

13. Liquid feeding system according to one of claims 11 or 12, **characterised in that** the inflow device is a container, in particular an inflow hopper, which has at least one sensor (22, 24) to record the filling level of the container.

14. Liquid feeding system according to one of claims 11 to 13, **characterised in that** the volume of liquid leaving the liquid storage container (14) can be regulated.

15. Liquid feeding system according to one of claims 11 to 14, **characterised in that** a booster pump is connected downstream in series to the mixing pump part (18).

16. Liquid feeding system according to one of claims 11 to 15, **characterised in that** the feed line (16) comprises at least one main line and a plurality of secondary lines (36) connecting the main line to a corresponding plurality of delivery points.

17. Liquid feeding system according to one of claims 11 to 16, **characterised in that** in each case an adjusting means (39) for blocking with regard to the supply of liquid feed is assigned to each main line and each secondary line (36).

18. Liquid feeding system according to one of claims 11 to 17, **characterised in that** each feed line (16) comprises at least one delivery point (38) which is connected to a feed trough (40), wherein the feed trough (40) comprises at least one sensor to record the filling level of the feed trough (40).

## Revendications

1. Procédé pour nourrir des animaux avec des aliments liquides, en utilisant un dispositif selon l'une quelconque des revendications 11 à 18, comprenant les étapes suivantes consistant à : mettre à disposition au moins un ingrédient d'aliments solide ou pâteux pour animaux; rassembler un liquide et l'au moins un ingrédient d'aliments solide ou pâteux pour animaux; mélanger l'au moins un ingrédient d'aliments solide ou pâteux pour animaux au liquide pour obtenir un aliment liquide pour animaux ; et transporter l'aliment liquide pour animaux en direction au moins d'un point de distribution (38) pour l'alimentation des animaux, **caractérisé en ce que** le procédé comprend un mode de transport, dans lequel le mélange de l'au moins un ingrédient d'aliments solide ou pâteux pour animaux avec le liquide et le transport de l'aliment liquide pour animaux en direction du point de distribution (38) sont effectués pour l'alimentation des animaux au cours d'une étape de travail, **caractérisé en ce que** le niveau de remplissage d'une mangeoire (40) reliée au point de distribution (38) est surveillé au moyen d'un capteur, et **en ce que** le capteur émet un signal de demande d'aliments pour animaux quand un niveau de remplissage bas préalablement défini de la mangeoire (40) a été identifié, et **en ce que** le procédé comprend un mode de recirculation par pompage, dans lequel le liquide ou l'aliment liquide pour animaux est mis en circulation dans un conduit annulaire (28, 34, 42) et le signal de demande d'aliments pour animaux est surveillé,
et une commutation dans le mode de transport est effectuée quand un signal de demande d'aliments pour animaux est émis par l'au moins un point de distribution.

2. Procédé selon la revendication 1, **caractérisé en ce que** le procédé comprend un mode de recirculation par pompage, dans lequel le liquide ou l'aliment liquide pour animaux est mis en circulation dans un conduit annulaire (28, 34, 42) et le signal de demande d'aliments pour animaux est surveillé.

3. Procédé selon l'une quelconque des revendications précédentes, **caractérisé en ce qu'**une commutation hors du mode de transport est effectuée quand aucun de l'au moins un point de distribution (38) n'émet un signal de demande d'aliments pour animaux.

4. Procédé selon l'une quelconque des revendications précédentes, **caractérisé en ce que** le procédé comprend un mode de pause, dans lequel le signal de demande d'aliments pour animaux est surveillé, tandis que l'aliment liquide pour animaux repose dans un conduit annulaire (28, 34, 42).

5. Procédé selon la revendication 4, **caractérisé en ce qu'**une commutation du mode de recirculation par pompage dans le mode de pause est effectuée quand aucun signal de demande d'aliments pour animaux n'a été émis par au moins un point de distribution (38) à l'issue d'un délai de surveillance de recirculation par pompage prédéterminé.

6. Procédé selon la revendication 4 ou 5, **caractérisé en ce qu'**on attend, dans le mode de pause, en présence d'un signal de demande d'aliments pour animaux par au moins un point de distribution, un temps de surveillance de pause prédéterminé, et **en ce qu'**une commutation du mode de pause dans le mode de recirculation par pompage ou dans le mode de transport est effectuée en présence d'un signal de demande d'aliments pour animaux maintenu à l'issue dudit temps de surveillance de pause.

7. Procédé selon l'une quelconque des revendications précédentes, **caractérisé en ce que** le procédé comprend un mode de remplacement de mélanges, dans lequel l'au moins un ingrédient d'aliments solide ou pâteux et/ou le liquide pour animaux sont remplacés, et qui est lancé après l'entrée d'un ordre de remplacement de mélanges, quand aucun signal de demande d'aliments pour animaux n'a été émis par l'au moins un point de distribution (38) à l'issue d'un temps de surveillance de mode de pause prédéterminé.

8. Procédé selon la revendication 4 et 7, **caractérisé en ce qu'**une commutation du mode de pause dans un mode d'arrêt, dans lequel l'aliment liquide pour animaux repose dans le conduit annulaire (28, 34, 42) et aucun signal de demande d'aliments pour animaux n'est surveillé, est effectuée quand aucun signal de demande d'aliments pour animaux n'a été émis par l'au moins un point de distribution et aucun mode de remplacement de mélanges n'a lieu après un deuxième temps de surveillance de mode de pause prédéfini.

9. Procédé selon l'une quelconque des revendications précédentes, **caractérisé en ce**
- **qu'**un premier mode de recirculation par pompage est prévu, dans lequel le liquide est mis en circulation dans un conduit annulaire et un signal de demande d'aliments pour animaux est surveillé ;
- **qu'**on passe du premier mode de recirculation par pompage dans le mode de transport à réception d'un signal de demande d'aliments pour animaux, le signal de demande d'aliments pour animaux continuant à être surveillé dans le mode de transport,
- **que** le mode de transport devient un deuxième mode de recirculation par pompage quand aucun signal de demande d'aliments pour animaux n'est plus présent, dans le deuxième mode de recirculation par pompage, l'aliment liquide pour animaux étant mis en circulation, dans le conduit annulaire et le signal de demande d'aliments pour animaux étant surveillé,
- **qu'**on passe soit du deuxième mode de recirculation de pompage dans le mode de transport quand un signal de demande d'aliments pour animaux est à nouveau présent, ou qu'on passe du mode de recirculation par pompage dans le mode de pause à l'issue d'un temps de surveillance de mode de recirculation par pompage prédéfini, **caractérisé par** une soupape (44), en particulier une soupape de dérivation tel que dans la revendication 11.

10. Procédé selon la revendication 9,
**caractérisé en ce qu'**on passe du mode de pause soit dans le deuxième mode de recirculation par pompage ou dans le mode de transport quand un signal de demande d'aliments pour animaux est émis, soit qu'on passe dans un mode de remplacement de mélanges ou dans un mode de pause à l'issue d'un temps de surveillance de mode de pause prédéfini.

11. Installation d'alimentation liquide pour animaux, comprenant une arrivée d'ingrédients d'aliments pour animaux (12), un réservoir de liquide (14) et au moins un point de distribution (38) pour l'alimentation des animaux, **caractérisée par** un dispositif de mélange et de pompage, qui est relié à une première ouverture d'entrée servant au raccordement de l'arrivée d'ingrédients d'aliments pour animaux (12), à une deuxième ouverture d'entrée servant au raccordement du réservoir de liquide (14) et à une ouverture de sortie servant au raccordement de l'au moins un point de distribution (38) et qui est réalisé pour mélanger, lors d'une étape de travail, au moins un ingrédient d'aliments pour animaux provenant de l'arrivée d'ingrédients d'aliments pour animaux (12) à un liquide provenant du réservoir de liquide (14) pour fabriquer des aliments liquides pour animaux et pour transporter l'aliment liquide pour animaux en direction de l'au moins un point de distribution (38), **caractérisée par** une soupape (44), en particulier par une soupape de dérivation, qui permet, dans un état ouvert, la mise en circulation de l'aliment liquide pour animaux dans un conduit annulaire reliant une ouverture d'entrée du dispositif de mélange et de pompage à l'ouverture de sortie du dispositif de mélange et de pompage et qui interrompt dans le même temps le transport en direction du point de distribution (38).

12. Installation d'alimentation liquide pour animaux selon la revendication 11, **caractérisée en ce que** le dispositif de mélange et de pompage présente un stator et un rotor coaxial et pouvant tourner par rapport audit stator.

13. Installation d'alimentation liquide pour animaux selon l'une quelconque des revendications 11 ou 12, **caractérisée en ce que** le dispositif d'admission est un contenant, en particulier une trémie d'admission, qui présente au moins un capteur (22, 24) pour détecter le niveau de remplissage du contenant.

14. Installation d'alimentation liquide pour animaux selon l'une quelconque des revendications 11 à 13, **caractérisée en ce que** la quantité de liquide s'écoulant hors du réservoir de liquide (14) peut être régulée.

15. Installation d'alimentation liquide pour animaux selon l'une quelconque des revendications 11 à 14, **caractérisée en ce qu'**une pompe d'élévation de pression est installée en série en aval de la partie de mélange et de pompage (18).

16. Installation d'alimentation liquide pour animaux selon l'une quelconque des revendications 11 à 15, **caractérisée en ce que** la ligne d'aliments pour animaux (16) comprend au moins une ligne principale et une multitude de lignes secondaires (36) reliant la ligne principale à une multitude correspondante de points de distribution.

17. Installation d'alimentation liquide pour animaux selon l'une quelconque des revendications 11 à 16, **caractérisée en ce que** respectivement un moyen de réglage (39) pour la fermeture par rapport à l'arrivée d'aliments liquides pour animaux est associé à chaque ligne principale et à chaque ligne secondaire (36).

18. Installation d'alimentation liquide pour animaux selon l'une quelconque des revendications 11 à 17, **caractérisée en ce que** chaque ligne d'aliments pour animaux (16) comprend au moins un point de distribution (38), qui est relié à une mangeoire (40), la mangeoire (40) comprenant au moins un capteur pour détecter le niveau de remplissage de la mangeoire (40).
